# FASCICULE DE BREVET EUROPEEN

(11) **EP 1 540 229 B1**
(45) Date de publication et mention de la délivrance du brevet: **07.05.2008**
(21) Numéro de dépôt: 03763953.1
(22) Date de dépôt: 10.07.2003
(51) Int. Cl.: F16L 23/08

(54) **COLLIER DE SERRAGE**
KLEMMRING
CLAMPING RING

(30) Priorité: 15.07.2002 FR 0208884
(43) Date de publication de la demande: 15.06.2005
(73) Titulaire: Etablissements CAILLAU, 92130 Issy-les-Moulineaux (FR)
(72) Inventeur: CHENE, Richard, F-41320 Maray (FR); GOUSSAULT, Didier, F-41200 Romorantin (FR)
(74) Mandataire: Intes, Didier Gérard André
(86) Numéro de dépôt international: PCT/FR2003/002162
(87) Numéro de publication internationale: WO 2004/008015

(56) Documents cités:
- EP-A- 0 305 232
- WO-A-98/43010
- US-A- 2 270 375

## Description

La présente invention concerne un collier de serrage comprenant un anneau ouvert dont les deux extrémités portent chacune une patte d'appui présentant un perçage, et des moyens de serrage comprenant une vis de serrage, un écrou et une entretoise, la vis ayant une tige qui traverse les perçages des pattes d'appui et une tête située du côté de l'une des pattes d'appui, l'écrou étant situé du côté de l'autre patte d'appui et coopérant avec la tige de la vis, au moins un premier des deux éléments constitués par la tête de la vis et par l'écrou étant susceptible d'être entraîné en rotation pour serrer la vis et l'entretoise étant disposée entre ce premier élément et la patte d'appui du côté de laquelle ledit premier élément est situé.

On connaît un collier de serrage de ce type, par exemple par les documents EP 0 305 232 et WO 98/43 010.

L'entretoise permet d'éloigner quelque peu l'élément devant être entraîné en rotation (écrou ou tête de la vis) de la patte d'appui du collier, et également de l'anneau de ce dernier. Ainsi, cet élément est plus facilement accessible pour l'outil de serrage du collier.

Bien entendu, une autre possibilité pour favoriser cette accessibilité consisterait à doter l'élément en question d'une longueur relativement importante pour qu'une partie d'extrémité de cet élément soit facilement accessible par l'outil de serrage. Dans ce cas, la patte de cet élément ne coopérant pas avec cet outil de serrage pourrait être réalisée sous la forme d'une partie à section circulaire.

Toutefois, une telle solution présente l'inconvénient d'être relativement coûteuse.

La présence d'une entretoise est donc intéressante, surtout si cette dernière est une pièce peu onéreuse.

La présente invention vise à améliorer encore l'état de la technique connu en proposant un collier dont l'entretoise soit une pièce très peu coûteuse et simple à fabriquer.

Ce but est atteint grâce au fait que l'entretoise est formée par un flanc, enroulé sur lui-même et disposé autour de la tige de la vis.

En disposant d'un flanc, coupé aux bonnes dimensions en longueur et en largeur, il est très simple d'enrouler ce flanc sur lui-même et de le disposer autour de la tige de la vis pour former une entretoise sensiblement cylindrique. Si, selon le type de collier et le type d'outil de serrage, différentes longueurs de l'entretoises sont nécessaires, il suffit de réaliser ces dernières à partir de plusieurs flancs dont les largeurs sont choisies en conséquence. Les outils de fabrication n'ont pas à être autrement modifiés, et, globalement, l'entretoise est une pièce très peu coûteuse.

Avantageusement, la patte d'appui contre laquelle est disposée l'entretoise présente un rebord et le plan de joint des deux extrémités du flanc dans lequel est formée l'entretoise engagé sous ce rebord.

Lors du serrage, l'entretoise est soumise à des contraintes relativement importantes, qui s'exercent en particulier axialement. Le rebord retient l'entretoise vis-à-vis des risques d'ouverture de cette dernière dans son plan de joint.

L'invention vise également, pour un collier de serrage du type précité, connu par les documents EP 0 305 232 et WO 98/43010, à améliorer la répartition des efforts qui s'exercent sur le collier lors de son serrage.

En effet, avant le serrage du collier, la tige de la vis est orientée sensiblement parallèlement à un diamètre du cercle dont l'anneau du collier définit une portion. Au cours du serrage, les deux pattes d'appui se rapprochent l'une de l'autre et leurs orientations par rapport à cette direction changent du fait de la diminution du diamètre de l'anneau. Ainsi, avant le serrage du collier, les deux pattes d'appui peuvent être sensiblement parallèles entre elles et donc perpendiculaires au diamètre précité, ou bien elles vont légèrement en s'écartant l'une de l'autre dans le sens allant en s'éloignant du centre du collier. En revanche, à la fin du serrage, du fait de la diminution du diamètre de l'anneau, les pattes d'appui sont inclinées l'une vers l'autre dans le sens allant en s'éloignant du centre du collier.

Cette inclinaison modifie l'orientation de la vis par rapport aux pattes d'appui, de sorte que les contraintes de serrage élevées, appliquées en particulier à la fin du serrage, risquent d'être mal réparties, voire de conduire à un affaiblissement, à un gauchissement ou même à une rupture de la vis, de l'entretoise ou de la patte d'appui considérée.

L'invention vise à améliorer cette situation.

Ce but est atteint grâce au fait que l'entretoise présente un premier bord d'extrémité coopérant avec ledit premier élément et un deuxième bord d'extrémité coopérant avec la patte d'appui contre laquelle est disposée l'entretoise, le premier bord d'extrémité étant sensiblement perpendiculaire à la direction longitudinale de l'entretoise, tandis que, au moins à l'état serré du collier, le deuxième bord d'extrémité est incliné par rapport à la perpendiculaire à ladite direction longitudinale, l'inclinaison du deuxième bord étant telle que la longueur de l'entretoise augmente dans le sens allant en s'éloignant de l'anneau du collier.

C'est évidemment à la fin du serrage que les contraintes exercées sur les pattes d'appui sont les plus élevées. Les efforts de serrage sont directement appliqués à l'élément (tête de la vis ou écrou) qui est entraîné en rotation pour le serrage et c'est l'entretoise qui transmet ces efforts à la patte d'appui avec laquelle elle coopère.

Grâce à la conformation précitée, vers la fin du serrage du collier, le deuxième bord d'extrémité de l'entretoise est en contact avec la patte d'appui sur sensiblement l'intégralité de son pourtour. Il en résulte que les efforts de serrage sont répartis de manière optimale sur la patte d'appui, ce qui permet d'éviter que des contraintes localement trop importantes ne conduisent à un affaiblissement, à un gauchissement ou même à une rupture de la vis, de l'entretoise ou de la patte d'appui considérée.

Avantageusement, le flanc qui est enroulé sur lui-même pour former l'entretoise présente une largeur qui varie selon la longueur de ce flanc.

Le flanc peut être facilement découpé dans une feuille de métal sous la forme d'une bande de longueur ou sensiblement constante, mais dont la largeur varie de manière à donner, lorsque le flanc est enroulé sur lui-même pour former l'entretoise, l'inclinaison du deuxième bord d'extrémité de l'entretoise par rapport au premier.

Selon une variante avantageuse, l'entretoise est déformable sur une partie de son pourtour dans le sens de sa longueur. Par convention, la longueur de l'entretoise est mesurée, lorsque l'entretoise est mise en place sur la vis, selon la direction axiale de la vis.

On peut alors choisir que, pendant l'intégralité du serrage du collier ou sur une partie importante de la course des pattes d'appui lors de ce serrage, le deuxième bord d'extrémité de l'entretoise soit en contact sensiblement tout en pourtour avec la patte d'appui avec laquelle il coopère. En effet, au fur et à mesure du serrage, l'entretoise peut alors se déformer de manière à parvenir, à l'état serré du collier, à l'inclinaison précitée du deuxième bord de l'entretoise. Cette entretoise peut être réalisée à partir d'un flanc de largeur constante.

Par exemple, l'entretoise présente, avant le serrage du collier, une fente transversale, qui s'étend sur une partie du pourtour de l'entretoise située du côté de l'anneau du collier et qui est apte à se refermer au moins partiellement lors du serrage du collier.

Initialement, la fente présente une largeur (mesurée selon la longueur de l'entretoise) qui est relativement importante puis, au cours du serrage, cette largeur diminue. Ceci constitue une manière simple et efficace de doter l'entretoise d'une capacité à se déformer longitudinalement lors du serrage.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 montre le collier de l'invention à l'état non serré, selon une coupe prise perpendiculairement à son axe ;
- la figure 2 montre, en vue extérieure, le même collier à l'état serré ;
- la figure 3 est une coupe de la région III de la figure 2, dans le même plan que la coupe de la figure 1 ;
- la figure 3A est une coupe selon la ligne IIIA-IIIA de la figure 3 ;
- les figures 4 et 5 sont deux vues en perspective de l'entretoise utilisée sur ce collier ;
- la figure 6 montre le flanc à partir duquel est réalisée l'entretoise ;
- la figure 7 montre, en élévation, une entretoise selon une variante de réalisation, avant le serrage du collier ; et
- la figure 8 montre l'entretoise de la figure 7 après le serrage du collier.

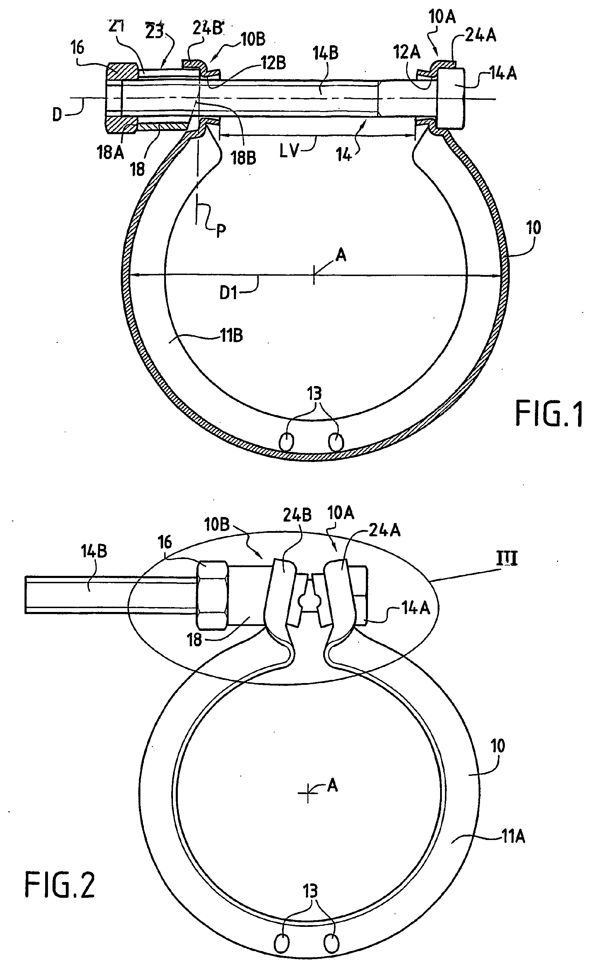

Comme on le voit sur les figures 1 et 2, le collier comprend un anneau 10 qui est ouvert, et dont ses deux extrémités portent chacune une patte d'appui, respectivement 10A et 10B.

Chacune de ces pattes d'appui présente un perçage, respectivement 12A et 12B.

Les moyens de serrage du collier comprennent une vis de serrage 14 dont la tête 14A repose contre la patte d'appui 12A, et dont la tige 14B traverse les perçages 12A et 12B. A son extrémité opposée à la tête, et de l'autre côté de la patte d'appui 10B par rapport à la patte d'appui 10A, la tige 14B coopère avec un écrou 16. Une entretoise 18 est disposée entre l'écrou 16 et la patte d'appui 10B.

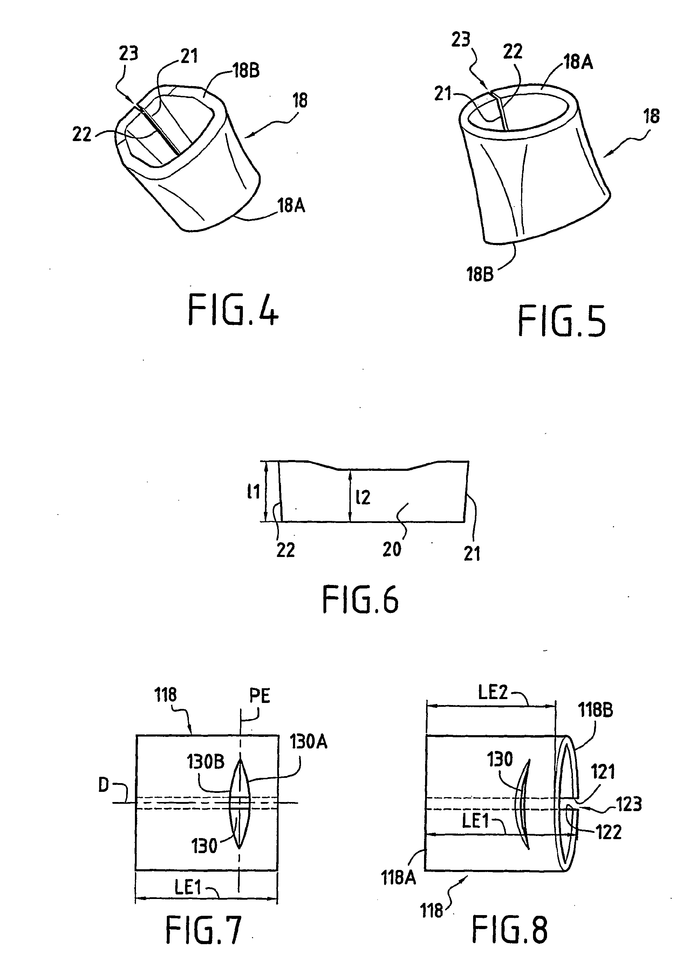

Cette entretoise est formée à partir du flanc 20 de la figure 6 qui est enroulé sur lui-même de telle sorte que ses extrémités 21 et 22 se trouvent l'une en regard de l'autre, comme on le voit en particulier sur les figures 4 et 5. Du fait de cet enroulement, l'entretoise présente une forme globalement cylindrique, et sa longueur permet de maintenir l'écrou 16 à distance de la patte 10B pour faciliter le serrage de cet écrou.

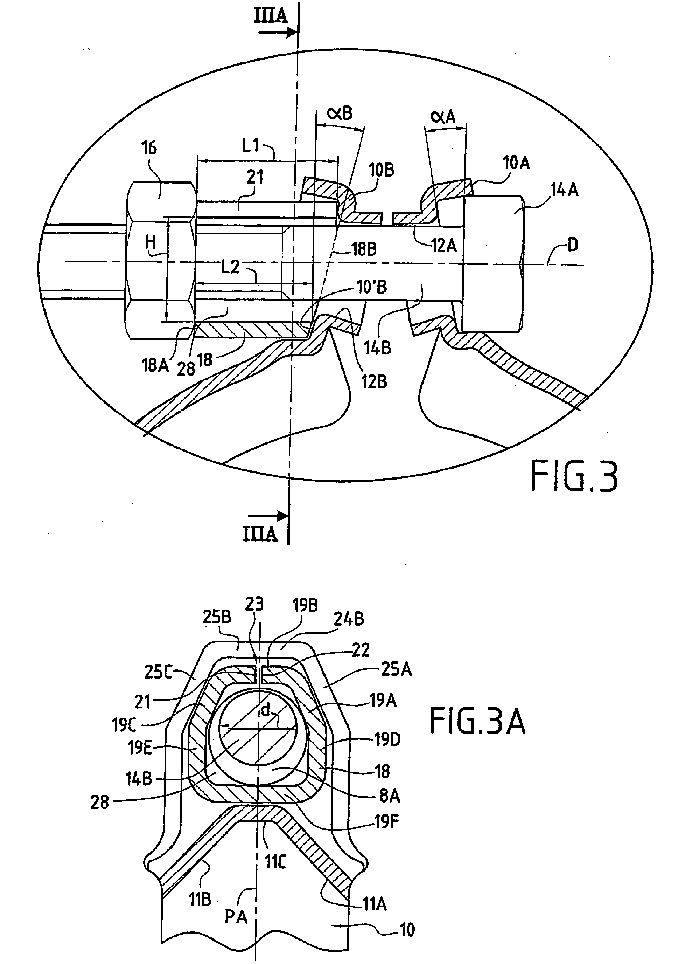

Les extrémités 21 et 22 du flanc dans lequel est formée l'entretoise sont disposées l'une contre l'autre, ou à une très faible distance l'une de l'autre, de manière à former un plan de joint 23 de l'entretoise. Les coupes des figures 1 et 3 sont précisément réalisées dans ce plan de joint.

Chacune des pattes d'appui 10A et 10B présente un rebord, respectivement 24A et 248 formé par pliage.

En effet, pour former les pattes d'appui, la bande dans laquelle est réalisé l'anneau du collier est redressée sensiblement radialement et les bords de chaque patte d'appui sont repliés dans le sens allant en s'éloignant de l'autre patte d'appui.

Ainsi, la tête 14A de la vis peut s'encastrer sous le rebord 24A. Cette tête est par exemple formée par un six pans, et le rebord peut avoir un contour épousant en partie ce six pans, formant ainsi un moyen anti-rotation pour la vis.

L'entretoise est quant à elle engagée sous le rebord 24B de la patte d'appui 10B.

On voit sur la figure 1 que, même à l'état non serré du collier, le plan de joint 23 des deux extrémités 21, 22 du flanc 20 se trouve sous ce rebord. Ceci permet d'éviter l"'ouverture" de ce plan de joint, c'est-à-dire le déroulement partiel de l'entretoise, lors du serrage du collier. On voit en particulier sur la figure 3A que la périphérie intérieure du rebord 24B a une forme adaptée à celle de la périphérie extérieure de l'entretoise, au moins dans la région du plan de joint 23, de manière à effectivement empêcher l'ouverture de cette dernière.

Dans l'exemple avantageux représenté, l'anneau 10 du collier présente une section qui définit deux ailes, respectivement 11A et 11B. Par exemple, cette section a sensiblement la forme d'un V. En effet, ce collier est adapté au serrage de deux tubes présentant chacun, sur leur périphérie externe, une surface d'appui formée sur une collerette avec laquelle coopère respectivement l'aile 11A ou l'aile 11B. Il s'agit par exemple de tubes d'échappement. La pointe du V formée par la section de l'anneau peut être très arrondie, voir quasiment aplatie, comme dans WO 98/43 010.

Par ailleurs, dans l'exemple représenté, l'anneau du collier est formé en une seule pièce, mais il doit être entendu qu'il pourrait être également formé en deux pièces articulées l'une par rapport à l'autre comme dans WO 98/43 010.

On remarque que les ailes 11A et 11B présentent chacune deux bossages 13 en saillie sur la périphérie externe du collier. Ces bossages, disposés dans une région sensiblement diamétralement opposée aux pattes d'appui 10A et 10B, sert de repérage angulaire pour la mise en place du collier sur les tubes.

L'entretoise 18 présente un premier bord d'extrémité 18A qui coopère avec l'écrou 16, et un deuxième bord d'extrémité 18B qui coopère avec la patte d'appui 10B.

Le premier bord 18A est sensiblement perpendiculaire à la direction longitudinale de l'entretoise, correspondant à la direction axiale D de la tige de la vis. Au cours de la rotation de l'écrou pour le serrage de la vis, cet écrou est en contact avec le bord d'extrémité 18A sur l'intégralité de son pourtour, de sorte que les contraintes exercées par l'écrou sur l'entretoise sont, à cet endroit, réparties de manière homogène.

En revanche, comme on le voit en particulier sur les figures 1 et 3, le deuxième bord d'extrémité 18B de l'entretoise est incliné par rapport à la perpendiculaire P à cette direction longitudinale D. Cette inclinaison est telle que la longueur de l'entretoise augmente dans le sens allant en s'éloignant de l'anneau du collier. Plus précisément, la longueur L1 de l'entretoise est maximale sur la portion longitudinale de cette dernière qui est la plus éloignée de l'axe A du collier, tandis que sa longueur L2 est minimale sur sa portion longitudinale la plus proche de cet axe A.

On voit sur la figure 1 que, à l'état non serré du collier, les deux pattes d'appui 10A et 10B sont dirigées sensiblement perpendiculairement à la direction axiale D de la vis (elles sont toutes deux parallèles à la direction P).

Lors du serrage du collier, les pattes d'appui 10A et 10B se rapprochent l'une de l'autre, et le diamètre du collier diminue de manière importante. Par exemple, la course de serrage correspond sensiblement à la longueur LV de la portion de tige de la vis s'étendant entre les deux pattes d'appui à l'état non serré du collier et peut être de l'ordre de 40 à 60 mm. Du fait, en particulier, de la présence des rebords 24A et 24B, les pattes d'appui 10A et 10B sont rigidifiées pour éviter leur pliage lors de ce serrage. Il n'en reste pas moins que la diminution importante de diamètre du collier lors de son serrage a pour conséquence que l'inclinaison des pattes d'appui par rapport à la direction axiale D de la vis change. On voit sur la figure 3 que, à l'état serré du collier, les pattes d'appui 10A et 10B sont respectivement inclinées par rapport à la perpendiculaire P à cette direction D selon un angle αA et αB. Avantageusement, ces deux angles sont égaux et opposés. L'inclinaison du bord d'extrémité 18B de l'entretoise par rapport à sa direction longitudinale est sensiblement égale à l'angle αB. Ainsi, à la fin du serrage, alors que les contraintes exercées par l'écrou 16 sur l'entretoise sont les plus importantes, cette entretoise est parfaitement en appui contre la face extérieure 10'B de la patte d'appui 10B, cette face extérieure étant celle qui est opposée à la patte d'appui 10A. Il en résulte que les contraintes sont réparties de manière homogène sur la patte d'appui 10B et la tige de la vis reste naturellement parallèle au diamètre D1 de l'anneau du collier.

On obtient ainsi un serrage de meilleure qualité, en particulier en évitant de soumettre la tige de la vis à des contraintes de flexion lors de son serrage. En effet, les contraintes de serrage étant élevées, le bord d'extrémité d'entretoise a naturellement tendance à tenter de se plaquer contre la face extérieure de la patte d'appui avec laquelle cette entretoise coopère. Si ce bord est sensiblement perpendiculaire à la direction longitudinale de l'entretoise alors que ladite face extérieure de la patte d'appui ne l'est pas, ceci a pour effet de solliciter la tige de la vis en flexion perpendiculairement à sa direction axiale. A chaque fois que l'écrou tourne sur la tige, cette contrainte de flexion change de direction par rapport à la tige de la vis. Au final, la tige de la vis a été soumise lors du serrage non seulement à une contrainte axiale, mais également à une infinité de contraintes radiales en flexion qui peuvent aboutir à un endommagement des filets de la vis.

Avantageusement, comme dans l'exemple représenté, le plan de joint de l'entretoise est tourné vers l'extérieur du collier. C'est donc dans la région de ce plan de joint que la longueur L1 de l'entretoise est maximale.

Comme on le voit sur la figure 6, le flanc 20 dans lequel est formée l'entretoise présente une largeur qui varie selon sa longueur. En l'espèce, il présente une largeur I1 dans la région de ses extrémités 21 et 22 et une largeur inférieure I2 dans une section centrale.

Avantageusement, le collier comporte des moyens de calage en rotation de l'entretoise par rapport à l'anneau.

En l'espèce, le rebord 24B sous lequel est engagée l'entretoise 18 par son bord d'extrémité 18B présente au moins une facette de calage en rotation (trois facettes 25A, 25B et 25C dans l'exemple représenté) avec laquelle coopère une portion à section non circulaire de la périphérie de l'entretoise (dans l'exemple représenté, cette entretoise présente trois portions aplaties 19A, 19B et 19C).

Les portions 19A à 19C précitées sont situées dans la région "supérieure" de l'entretoise, c'est-à-dire dans la région de cette dernière qui est la plus éloignée de l'axe A du collier. En se rapprochant de l'axe A, le bord d'extrémité 18B de l'entretoise présente des ailes, respectivement 19D et 19E sensiblement parallèles au plan PA qui est un plan perpendiculaire à l'axe du collier (voir la figure 3A), à leurs extrémités inférieures, ces ailes sont reliées par une portion aplatie 19F sensiblement perpendiculaire à la direction DA. Comme on le voit sur la figure 3A, cette région aplatie 19F se trouve en regard de la pointe 11C de la section du collier légèrement aplatie sous l'entretoise.

Au voisinage de son bord d'extrémité 18A, l'entretoise 18 présente une section sensiblement circulaire. En revanche, sa section est légèrement allongée dans une direction parallèle au plan PA. Cette section est localement aplatie du côté de l'anneau au voisinage du bord d'extrémité 18B. Pour réaliser cette différence de section sur la longueur de l'entretoise, les extrémités 21 et 22 du flanc 20 peuvent être légèrement divergentes, de telle sorte que la longueur de ce flanc varie légèrement sur sa largeur.

Plus précisément, lorsque l'on considère les figures 4 et 5, on voit que la section de l'entretoise varie progressivement entre une section circulaire sur son bord d'extrémité 18A et la section comprenant les portions 19A à 19F à son bord d'extrémité 18B.

La périphérie interne de l'entretoise délimite un canal 28 dont la hauteur H, mesurée dans le plan de rapprochement des pattes d'appui lors du serrage du collier, qui est également le plan PA évoqué précédemment, est supérieure au diamètre d de la tige de la vis. Même si la hauteur de ce canal varie en raison de la variation de la section de l'entretoise évoquée précédemment, cette hauteur reste supérieure au diamètre de la tige de la vis. Par exemple la hauteur du canal est au moins égale à 1,2 fois le diamètre d.

Sur la variante des figures 7 et 8, l'entretoise 118 est déformable sur une partie de son pourtour, dans le sens de sa longueur. Ainsi, à l'état non serré du collier, l'entretoise présente une première longueur LE1, qui est par exemple la même sur l'intégralité de son pourtour.

Lors du serrage du collier, une partie de ce pourtour se déforme de sorte que la longueur de l'entretoise se modifie, sur la partie du pourtour correspondante, pour accompagner l'inclinaison précédemment évoquée des pattes d'appui du collier, de manière à constamment être en contact avec la face extérieure 10'B de la patte d'appui 10B.

Par exemple, comme on le voit sur les figures 7 et 8, l'entretoise 118 présente, avant le serrage du collier, une fente transversale 130 qui s'étend sur une partie du pourtour de l'entretoise. Cette partie est celle qui est située du côté de l'anneau du collier 10 lorsque l'entretoise est en position sur la vis. Cette fente a par exemple deux bords concaves opposés, respectivement 130A et 130B situés de part et d'autre d'un plan PE perpendiculaire à la direction longitudinale D de l'entretoise.

Lors du serrage du collier, du fait des contraintes exercées par l'écrou 16 et de la réaction de la patte d'appui 10B, la fente 130 se referme au moins partiellement, de telle sorte que, sur la partie du pourtour de l'entretoise dans laquelle se trouve cette fente, la longueur LE2 de cette entretoise est devenue inférieure à sa longueur initiale LE1, qu'elle a conservé sur la partie de son pourtour opposé à ladite fente.

Avantageusement, la fente 130 est située sur une partie du pourtour de l'entretoise qui est opposée au plan de joint 123 de ses extrémités 121 et 122, ce plan de joint pouvant être orienté comme le plan de joint 23 de l'entretoise des figures précédentes et être engagé sous le rebord 24D.

Bien entendu, l'entretoise 118 peut avoir une section qui varie sur sa longueur, comme celle de l'entretoise 18 et être conformée de manière à être calée en rotation sous le rebord de la patte d'appui 10B.

Il est très intéressant d'un point de vue pratique, et pour limiter les coûts de fabrication, de réaliser l'entretoise à bord incliné à partir d'un flanc enroulé sur lui-même. Toutefois, elle pourrait être réalisée différemment, par exemple à partir d'un tube sectionné.

Dans le mode de réalisation qui vient d'être décrit, c'est l'écrou 16 qui est entraîné en rotation pour serrer le collier, et l'entretoise est disposée entre cet écrou et la patte d'appui 10B. De son côté, la tête 14A de vis est calée en rotation comme on l'a indiqué.

On pourrait inverser cette réalisation, en calant l'écrou 16 en rotation dans la patte 10B, en disposant l'entretoise 18 ou 118 du côté de la tête de la vis, et en entraînant cette tête en rotation lors du serrage du collier.

Cette disposition inversée présenterait l'avantage d'éviter, à l'état serré du collier, un déport trop important de la tige de la vis au-delà de l'écrou 16.

## Revendications

1. Collier de serrage comprenant un anneau ouvert (10) dont les deux extrémités portent chacune une patte d'appui (10A, 10B) présentant un perçage (12A, 12B), et des moyens de serrage comprenant une vis de serrage (14), un écrou (16) et une entretoise (18, 118), la vis ayant une tige (14B) qui traverse les perçages (12A, 12B) des pattes d'appui et une tête (14A) située du côté de l'une des pattes d'appui, l'écrou étant situé du côté de l'autre patte d'appui et coopérant avec la tige de la vis, au moins un premier (16) des deux éléments constitués par la tête de la vis et par l'écrou étant susceptible d'être entraîné en rotation pour serrer la vis et l'entretoise (18, 118) étant disposée entre ce premier élément et la patte d'appui du côté de laquelle ledit premier élément est situé,
**caractérisé en ce que** l'entretoise (18, 118) est formée par un flanc (20), enroulé sur lui-même et disposé autour de la tige (14B) de la vis (14).

2. Collier selon la revendication 1, **caractérisé en ce que** la patte d'appui (10B) contre laquelle est disposée l'entretoise (18, 118) présente un rebord (24B) et **en ce que** le plan de joint (23, 123) des deux extrémités (21, 22 ; 121, 122) du flanc (20) dans lequel est formée l'entretoise est engagé sous ce rebord (24B).

3. Collier de serrage comprenant un anneau ouvert (10) dont les deux extrémités portent chacune une patte d'appui (10A, 10B) présentant un perçage (12A, 12B), et des moyens de serrage comprenant une vis de serrage (14), un écrou (16) et une entretoise (18, 118), la vis ayant une tige (14B) qui traverse les perçages (12A, 12B) des pattes d'appui et une tête (14A) située du côté de l'une des pattes d'appui, l'écrou étant situé du côté de l'autre patte d'appui et coopérant avec la tige de la vis, au moins un premier (16) des deux éléments constitués par la tête de la vis et par l'écrou étant susceptible d'être entraîné en rotation pour serrer la vis et l'entretoise (18, 118) étant disposée entre ce premier élément et la patte d'appui du côté de laquelle ledit premier élément est situé,
**caractérisé en ce que** l'entretoise (18, 118) présente un premier bord (18A, 118A) d'extrémité coopérant avec ledit premier élément (16) et un deuxième bord (18B, 118B) d'extrémité coopérant avec la patte d'appui (10B) contre laquelle est disposée l'entretoise, le premier bord d'extrémité étant sensiblement perpendiculaire à la direction longitudinale (D) de l'entretoise (18, 118), tandis que, au moins à l'état serré du collier, le deuxième bord d'extrémité (18B, 118B) est incliné par rapport à la perpendiculaire à ladite direction longitudinale, l'inclinaison (αB) du deuxième bord (18B, 118B) étant telle que la longueur de l'entretoise augmente dans le sens allant en s'éloignant de l'anneau du collier.

4. Collier selon la revendication 3, **caractérisé en ce que** la patte d'appui (10B) contre laquelle est disposée l'entretoise (18, 118) présente un rebord (24B), **en ce que** l'entretoise (18, 118) est formée par un flanc (20), enroulé sur lui-même et disposé autour de la tige (14B) de la vis (14) et **en ce que** le plan de joint (23, 123) des deux extrémités (21, 22 ; 121, 122) du flanc (20) dans lequel est formée l'entretoise est engagé sous ce rebord (24B).

5. Collier selon la revendication 3 ou 4, **caractérisé en ce que** l'entretoise (18, 118) est formée par un flanc (20), enroulé sur lui-même et disposé autour de la tige (14B) de la vis (14) et **en ce que** le flanc (20) qui est enroulé sur lui-même pour former l'entretoise (18) présente une largeur (11, 12) qui varie selon la longueur de ce flanc.

6. Collier selon la revendication 5, **caractérisé en ce que** le flanc (20) qui est enroulé sur lui-même pour former l'entretoise (18) présente une largeur (11) maximale au voisinage du plan de joint (23) de ses extrémités (21, 22).

7. Collier selon l'une quelconque des revendications 3 à 6, **caractérisé en ce que** l'entretoise (118) est déformable sur une partie de son pourtour dans le sens de sa longueur.

8. Collier selon la revendication 7, **caractérisé en ce que** l'entretoise (118) présente, avant le serrage du collier, une fente transversale (130), qui s'étend sur une partie du pourtour de l'entretoise située du côté de l'anneau du collier (10) et qui est apte à se refermer au moins partiellement lors du serrage du collier.

9. Collier selon l'une quelconque des revendications 1 à 8, **caractérisé en ce que** la section de ladite entretoise (18) est aplatie du côté de l'anneau (10), au voisinage de son deuxième bord d'extrémité (18B) qui coopère avec la patte d'appui (10B) contre laquelle est disposée ladite entretoise.

10. Collier selon l'une quelconque des revendications 1 à 9, **caractérisé en ce qu'**il comporte des moyens (19A, 19B, 19C ; 25A, 25B, 25C) de calage en rotation de l'entretoise (18) par rapport à l'anneau (10).

11. Collier selon la revendication 10, **caractérisé en ce que** la patte d'appui (10B) contre laquelle est disposée l'entretoise (18) présente un rebord (24B) sous lequel est engagée l'entretoise et **en ce que** ce rebord présente au moins une facette de calage (25A, 25B, 25C) en rotation avec laquelle coopère une portion (19A, 19B, 19C) à section non circulaire de la périphérie de l'entretoise.

12. Collier selon l'une quelconque des revendications 1 à 11, **caractérisé en ce que** l'anneau (10) présente une section sensiblement en forme de V dont la pointe (11C) est saillante sur la périphérie externe de l'anneau.

13. Collier selon l'une quelconque des revendications 1 à 12, **caractérisé en ce que** la périphérie interne de l'entretoise délimite un canal (28) dont la hauteur (H), mesurée dans le plan (PA) de rapprochement des pattes d'appui lors du serrage du collier, est supérieure au diamètre (d) de la tige (14B) de la vis (14).

14. Collier selon la revendication 13, **caractérisé en ce que** la hauteur du canal (28) est au moins égale à 1,2 fois le diamètre (d) de la tige (14B) de la vis (14).

## Claims

1. A clamping collar comprising an open ring (10), each end of which carries a bearing tab (10A, 10B) provided with a bore (12A, 12B), and tightening means comprising a tightening bolt (14), a nut (16), and a spacer (18, 118), the bolt having a shank (14B) that passes through the bores (12A, 12B) in the bearing tabs and a head (14A) situated beside one of the bearing tabs, the nut being situated beside the other bearing tab, and co-operating with the shank of the bolt, at least a first one (16) of the two elements constituted by the head of the bolt and by the nut being suitable for being driven in rotation so as to tighten the bolt, and the spacer (18, 118) being disposed between said first element and the bearing tab beside which said first element is situated;
said clamping collar being **characterised in that** the spacer (18, 118) is formed by a rolled-up blank (20) disposed around the shank (14B) of the bolt (14).

2. A collar according to claim 1, **characterised in that** the bearing tab (10B) against which the spacer (18, 118) is disposed is provided with a lip (24B) and **in that** the join plane (23, 123) between the two ends (21, 22; 121, 122) of the blank (20) from which the spacer is formed is engaged under said lip (24B).

3. A clamping collar comprising an open ring (10), each end of which carries a bearing tab (10A, 10B) provided with a bore (12A, 12B), and tightening means comprising a tightening bolt (14), a nut (16), and a spacer (18, 118), the bolt having a shank (14B) that passes through the bores (12A, 12B) in the bearing tabs and a head (14A) situated beside one of the bearing tabs, the nut being situated beside the other bearing tab, and co-operating with the shank of the bolt, at least a first one (16) of the two elements constituted by the head of the bolt and by the nut being suitable for being driven in rotation so as to tighten the bolt, and the spacer (18, 118) being disposed between said first element and the bearing tab beside which said first element is situated;
said clamping collar being **characterised in that** the spacer (18, 118) presents a first end edge (18A, 118A) co-operating with said first element (16) and a second end edge (18B, 118B) co-operating with the bearing tab (10B) against which the spacer is disposed, the first end edge being substantially perpendicular to the longitudinal direction (D) of the spacer (18, 118) while, at least when the collar is in the tightened state, the second end edge (18B, 118B) is inclined relative to the perpendicular to said longitudinal direction, the inclination (αB) of the second edge (18B, 118B) being such that the length of the spacer increases in the direction going away from the ring of the collar.

4. A collar according to claim 3, **characterised in that** the bearing tab (10B) against which the spacer (18, 118) is disposed presents a lip (24B), **in that** the spacer (18, 118) is formed by a rolled-up blank (20) disposed around the shank (14B) of the bolt (14), and **in that** the join plane (23, 123) between the two ends (21, 22; 121, 122) of the blank (20) from which the spacer is formed is engaged under said lip (24B).

5. A collar according to claim 3 or 4, **characterised in that** the spacer (18, 118) is formed by a rolled-up blank (20) disposed around the shank (14B) of the bolt (14), and **in that** the blank (20) that is rolled up to form the spacer (18) presents a width (ℓ1, ℓ2) that varies over the length of said blank.

6. A collar according to claim 5, **characterised in that** the blank (20) that is rolled up to form the spacer (18) presents a maximum width ((ℓ1) in the vicinity of the join plane (23) between its ends (21, 22).

7. A collar according to any one of claims 3 to 6, **characterised in that** the spacer (118) is deformable over a portion of its periphery in its length direction.

8. A collar according to claim 7, **characterised in that**, before the collar is tightened, the spacer (118) presents a transverse slot (130) that extends over a portion of the periphery of the spacer situated on the side closer to the ring of the collar (10) and that is suitable for closing up at least in part when the collar is tightened.

9. A collar according to any one of claims 1 to 8, **characterised in that** the cross-section of said spacer (18) is flattened on the side closer to the ring (10), in the vicinity of its second end edge (18B) which co-operates with the bearing tab (10B) against which said spacer is disposed.

10. A collar according to any one of claims 1 to 9, **characterised in that** it is provided with wedging means (19A, 19B, 19C; 25A, 25B, 25C) for wedging the spacer (18) so that it is prevented from rotating relative to the ring (10).

11. A collar according to claim 10, **characterised in that** the bearing tab (10B) against which the spacer (18) is disposed has a lip (24B) under which the spacer is engaged, and **in that** said lip presents at least one rotation-preventing wedging facet (25A, 25B, 25C) which co-operates with a portion (19A, 19B, 19C) of the periphery of the spacer that is not circular.

12. A collar according to any one of claims 1 to 11, **characterised in that** the ring (10) presents a substantially V-shaped cross-section whose tip (11C) projects from the outside periphery of the ring.

13. A collar according to any one of claims 1 to 12, **characterised in that** the inside periphery of the spacer defines a channel (28) whose height (H) as measured in the plane (PA) in which the bearing tabs come towards each other while the collar is being tightened, is greater than the diameter (d) of the shank (14B) of the bolt (14).

14. A collar according to claim 13, **characterised in that** the height of the channel (28) is at least equal to 1.2 times the diameter (d) of the shank (14B) of the bolt (14).

## Patentansprüche

1. Klemmring mit einem offenen Reifen (10), dessen beide Enden jeweils eine mit einer Bohrung (12A, 12B) versehene Haltelasche (10A, 10B) tragen, und einer Klemmeinrichtung, die eine Klemmschraube (14), eine Mutter (16) und ein Abstandsstück (18, 118) umfasst, wobei die Schraube einen die Bohrungen (12A, 12B) der Haltelaschen durchquerenden Schaft (14B) und einen auf der Seite einer der Haltelaschen gelegenen Kopf (14A) hat, wobei die Mutter sich auf der Seite der anderen Haltelasche befindet und mit dem Schraubenschaft zusammenwirkt, wobei wenigstens ein erstes (16) der beiden von dem Schraubenkopf und der Mutter gebildeten Elemente zum Anziehen der Schraube gedreht zu werden vermag, und wobei das Abstandsstück (18, 118) zwischen diesem ersten Element und der Haltelasche angeordnet ist, auf deren Seite sich das erste Element befindet,
**dadurch gekennzeichnet, dass** das Abstandsstück (18, 118) durch ein auf sich eingerolltes und um den Schaft (14B) der Schraube (14) angeordnetes Flanschteil (20) gebildet ist.

2. Klemmring nach Anspruch 1,
**dadurch gekennzeichnet, dass** die Haltelasche (10B), gegen die das Abstandsstück (18, 118) angeordnet ist, einen Rand (24B) aufweist, und dass die Stoßfläche (23, 123) der beiden Enden (21, 22; 121, 122) des Flanschteils (20), aus dem das Abstandsstück gebildet ist, unter den Rand (24B) geschoben ist.

3. Klemmring mit einem offen Reifen (10), dessen beide Enden jeweils eine mit einer Bohrung (12A, 12B) versehene Haltelasche (10A, 10B) tragen, und einer Klemmeinrichtung, die eine Klemmschraube (14), eine Mutter (16) und ein Abstandsstück (18, 118) umfasst, wobei die Schraube einen die Bohrungen (12A, 12B) der Haltelaschen durchquerenden Schaft (14B) und einen auf der Seite einer der Haltelaschen gelegenen Kopf (14A) hat, wobei die Mutter sich auf der Seite der anderen Haltelasche befindet und mit dem Schraubenschaft zusammenwirkt, wobei wenigstens ein erstes (16) der beiden von dem Schraubenkopf und der Mutter gebildeten Elemente zum Anziehen der Schraube gedreht zu werden vermag, und wobei das Abstandsstück (18, 118) zwischen diesem ersten Element und der Haltelasche angeordnet ist, auf deren Seite sich das erste Element befindet,
**dadurch gekennzeichnet, dass** das Abstandsstück (18, 118) einen ersten mit dem ersten Element (16) zusammenwirkenden Außenrand (18A, 118A) und einen zweiten Außenrand (18B, 118B) aufweist, der mit der Haltelasche (10B) zusammenwirkt, gegen die das Abstandsstück angeordnet ist, wobei der erste Außenrand im Wesentlichen lotrecht zur Längsrichtung (D) des Abstandsstücks (18, 118) ist, während der zweite Außenrand (18B, (118B) zumindest im gespannten Zustand des Klemmrings bezüglich der zur Längsrichtung Senkrechten geneigt ist, wobei die Neigung (αB) des zweiten Rands (18B, 118B) derart ist, dass die Länge des Abstandsstücks mit Entfernung zum Klemmring zunimmt.

4. Klemmring nach Anspruch 3,
**dadurch gekennzeichnet, dass** die Haltelasche (10B), gegen die das Abstandsstück (18, 118) angeordnet ist, einen Rand (24B) aufweist, dass das Abstandsstück (18, 118) durch ein auf sich eingerolltes und um den Schaft (14B) der Schraube (14) angeordnetes Flanschteil (20) gebildet ist, und dass die Stoßfläche (23, 123) der beiden Enden (21, 22; 121, 122) des Flanschteils (20), aus dem das Abstandsstück gebildet ist, unter den Rand (24B) geschoben ist.

5. Klemmring nach Anspruch 3 oder 4,
**dadurch gekennzeichnet, dass** das Abstandsstück (18, 118) durch ein auf sich eingerolltes und um den Schaft (14B) der Schraube (14) angeordnetes Flanschteil (20) gebildet ist, und dass das Flanschteil (20), das zum Bilden des Abstandsstücks (18) auf sich eingerollt ist, eine Breite (11, 12) aufweist, die je nach der Länge des Flanschteils variiert.

6. Klemmring nach Anspruch 5,
**dadurch gekennzeichnet, dass** das Flanschteil (20), das zum Bilden des Abstandsstücks (18) auf sich eingerollt ist, eine größte Breite (11) in der Nähe der Stoßfläche (23) seiner Enden (21, 22) hat.

7. Klemmring nach einem der Ansprüche 3 bis 6,
**dadurch gekennzeichnet, dass** das Abstandsstück (118) auf einem Teil seines Umfangs in seiner Längsrichtung verformbar ist.

8. Klemmring nach Anspruch 7,
**dadurch gekennzeichnet, dass** das Abstandsstück (118) vor dem Spannen des Klemmrings einen Querspalt (130) aufweist, der über einen auf der Seite des Reifens des Klemmrings (10) gelegenen Teil des Umfangs des Abstandsstücks verläuft und der sich beim Spannen des Klemmrings wenigstens teilweise zu schließen vermag.

9. Klemmring nach einem der Ansprüche 1 bis 8,
**dadurch gekennzeichnet, dass** der Querschnitt des Abstandsstücks (18) auf der Seite des Reifens (10) nahe seinem zweiten Außenrand (18B), der mit der Haltelasche (10B) zusammenwirkt, gegen die das Abstandsstück angeordnet ist, abgeplattet ist.

10. Klemmring nach einem der Ansprüche 1 bis 9,
**dadurch gekennzeichnet, dass** er Mittel (19A, 19B, 19C; 25A, 25B, 25C) zur Drehblockierung des Abstandsstücks (18) bezüglich des Reifens (10) umfasst.

11. Klemmring nach Anspruch 10,
**dadurch gekennzeichnet, dass** die Haltelasche (10B), gegen die das Abstandsstück (18) angeordnet ist, einen Rand (24B) aufweist, unter den das Abstandsstück geschoben ist, und dass der Rand wenigstens eine Drehblockierungsfläche (25A, 25B, 25C) aufweist, mit der ein einen unrunden Querschnitt aufweisendes Stück (19A, 19B, 19C) des Umfangs des Abstandsstücks zusammenwirkt.

12. Klemmring nach einem der Ansprüche 1 bis 11,
**dadurch gekennzeichnet, dass** der Reifen (10) einen im Wesentlichen V-förmigen Querschnitt aufweist, dessen Scheitel (11C) am Außenumfang des Reifens vorsteht.

13. Klemmring nach einem der Ansprüche 1 bis 12,
**dadurch gekennzeichnet, dass** der Innenumfang des Abstandsstücks einen Kanal (28) begrenzt, dessen Höhe (H), gemessen in der Annäherungsebene (PA) der Haltelaschen beim Spannen des Klemmrings, größer als der Durchmesser (d) des Schafts (14B) der Schraube (14) ist.

14. Klemmring nach Anspruch 13,
**dadurch gekennzeichnet, dass** die Höhe des Kanals (28) wenigstens dem 1,2fachen des Durchmessers (d) des Schafts (14B) der Schraube (14) entspricht.
